# EUROPÄISCHE PATENTSCHRIFT

(11) **EP 1 498 702 B1**
(45) Veröffentlichungstag und Bekanntmachung des Hinweises auf die Patenterteilung: **26.11.2008**
(21) Anmeldenummer: 04016040.0
(22) Anmeldetag: 08.07.2004
(51) Int. Cl.: G01F 23/296, G01N 11/16, G01N 9/00

(54) **Feldgerät zur Bestimmung und/oder Überwachung einer Prozessgrösse**
Field device for measuring and/or monitoring a process parameter
Dispositif de terrain pour mesurer et/ou surveiller une grandeur de procéssus

(30) Priorität: 10.07.2003 DE 10331428
(43) Veröffentlichungstag der Anmeldung: 19.01.2005
(73) Patentinhaber: ENDRESS + HAUSER GMBH + CO., D-79689 Maulburg (DE)
(72) Erfinder: Meier, Jürgen, 79689 Maulburg (DE); D'Angelico, Sascha, 79588 Efringen-Kirchen (DE)
(74) Vertreter: Andres, Angelika Maria

(56) Entgegenhaltungen:
- EP-A- 0 810 423
- DE-A- 19 720 519
- US-A- 5 895 848

## Beschreibung

Die Erfindung bezieht sich auf ein Verfahren zur Ansteuerung einer piezo-elektrischen Einheit in einem Feldgerät zur Bestimmung und/oder Überwachung einer Prozessgröße eines Mediums, wobei die piezo-elektrische Einheit mit einer mechanisch schwingfähigen Einheit gekoppelt ist, wobei die piezo-elektrische Einheit zu Schwingungen angeregt wird, bzw. wobei die Schwingungen der piezo-elektrischen Einheit detektiert werden. Bei der Prozessgröße handelt es sich beispielsweise um den Füllstand, die Dichte oder die Viskosität eines Mediums, z.B. einer Flüssigkeit, in einem Behälter. Weiterhin bezieht sich die Erfindung auf ein entsprechendes Feldgerät.

Von der Anmelderin werden Feldgeräte zur Messung und/oder Überwachung des Füllstands eines Mediums in einem Behälter unter der Bezeichnung "Liquiphant" produziert und vertrieben. Ein solches Messgerät besteht üblicherweise aus einer schwingfähigen Einheit, einer Antriebs-/Empfangseinheit und einer Regel-/Steuereinheit. Die Antriebs-/Empfangseinheit regt die schwingfähige Einheit (beim Liquiphanten ist dies eine Schwinggabel) zu Schwingungen an und empfängt die Schwingungen. Die Frequenz und die Amplitude der Schwingung hängen z.B. davon ab, ob die schwingfähige Einheit in Luft schwingt oder ob sie von dem Medium bedeckt wird. Somit lässt sich z.B. aus der Amplitude oder aus der Frequenz auf den Grad der Bedeckung rückschließen. In der Antriebs-/Empfangseinheit ist beispielsweise ein piezo-elektrisches Element vorhanden, das ein elektrisches Signal in eine mechanische Schwingung umsetzt, die dann über eine passende Membran auf die schwingfähige Einheit übertragen wird. Entsprechendes gilt für die Umsetzung der mechanischen Schwingung in ein elektrisches Signal. Eine Rückkoppelelektronik, die das Signal der schwingfähigen Einheit wieder verstärkt und rückführt, und die Elektronik zur Auswertung und weiteren Verarbeitung der Schwingung sind in einer Regel-/Auswerteeinheit zusammengefasst.

Die Anregung eines piezo-elektrischen Elements erfordert oft eine hohe Spannung, um die gewünschte mechanische Auslenkung der piezo-elektrischen Einheit und der damit verbundenen Schwingungsamplitude der schwingfähigen Einheit zu erreichen. Eine große Anregespannung und damit eine große Amplitude haben die Vorteile, dass Fremdvibrationen deutlich weniger Auswirkungen auf die eigentliche Schwingung haben, dass z.B. Ansatz abgeschüttelt wird und dass die Empfindlichkeit und die Dynamik des Empfangssignals verbessert werden. Auf der anderen Seite sind kleinere Versorgungsspannung einfacher in der Handhabung, da hohe Spannungen z.B. entsprechend ausgestaltete Übertrager oder Transformatoren für die Erzeugung benötigen und da auch die Schaltungselemente für solche hohen Spannungen ausgelegt sein müssen.

Daher ist es die Aufgabe der Erfindung zu ermöglichen, eine piezo-elektrische Einheit mit einer Spannungsdifferenz zu Schwingungen anzuregen, wobei die Spannungsdifferenz größter ist als die Spannungsdifferenz der bereitgestellten Betriebsspannung.

Die Aufgabe wird erfindungsgemäß bezüglich des Verfahrens durch die Merkmale des Anspruchs 1 gelöst. Die Spannungsverstärkungseinheit Spannungssignal (U) beaufschlagt. Dabei handelt es sich um ein Signal, das zwischen einem annährend konstanten oberen (U^{O}) und einem annährend konstanten unteren (U^{U}) Spannungswert alterniert. Dies kann ein Rechteckoder ein rechteckähnliches, z.B. ein trapezförmiges Signal sein. Ein reines Rechtecksignal ist mit der Elektronik üblicherweise kaum zu erreichen; üblicherweise handelt es sich eher um einen trapezförmigen Signalverlauf. Der Übergang zwischen diesen beiden Werten hängt von der konkreten Ausgestaltung ab. Die Spannungsdifferenz (ΔU) ist im Sinne der Erfindung kleiner als der Spannungshub, der zum Umladen der piezo-elektrischen Einheit mit der angestrebten Amplitude benötigt wird. Es wird somit von der Ausgangseinheit der Antriebs-/Empfangseinheit, d.h. von der Elektronik, die der Spannungsverstärkungseinheit vorgelagert ist, keine entsprechend hohe Gleichspannung als Betriebsspannung erfordert. Die erfindungsgemäße Spannungsverstärkungseinheit ist nun so ausgestaltet, dass aus dem primären Spannungssignal (U), mit dem die Spannungsverstärkereinheit beaufschlagt wird, ein zweites Spannungssignal (U₂) erzeugt wird, dessen Signalverlauf ebenfalls einen Wechsel zwischen einem oberen (U₂^{O}) und einem unteren (U₂^{U}) Spannungswert darstellt. Bei diesem zweiten Spannungssignal (U₂) ist jedoch die Spannungsdifferenz (ΔU₂) größer als beim primären Spannungssignal (U). Die Frequenzen sind jedoch bei beiden Spannungssignalen U, U₂ identisch. Durch die Spannungsverstärkungseinheit wird also der Spannungshub erhöht, ohne dass auch die dem Spannungshub (ΔU₂) entsprechende Gleichstrom-Versorgungsspannung bereitgestellt werden muss. Die Grundidee ist also, dass jeweils abwechselnd zwei konstante Spannungen an der Spannungsverstärkungseinheit anliegen. Die Frequenz des Wechsels zwischen diesen beiden Spannungswerten ist die Frequenz, mit der die piezo-elektrisch Einheit schwingen soll. Die Spannungsdifferenz zwischen den beiden Spannungswerten ist jedoch geringer als die Spannungsdifferenz, die notwendig ist, um die gewünschte Amplitude der Schwingungen der piezo-elektrischen Einheit zu erzielen. Daher ist diese Spannungsverstärkungseinheit so ausgestaltet, dass die Spannungsdifferenz auf den benötigten Wert erhöht wird. Dies geschieht derart, dass die piezo-elektrische Einheit jeweils direkt mit den Abschnitten mit einem Spannungswert - vorzugsweise der betraglich größere Spannungswert - des primären Spannungssignals beaufschlagt werden. Während der jeweils andere Abschnitt des primären Spannungssignals mit dem betraglich kleineren Spannungswert an der Spannungsverstärkungseinheit anliegt, wird die piezo-elektrische Einheit im Wesentlichen mit der Spannungsdifferenz des primären Spannungssignals beaufschlagt. Somit ergibt sich im Wesentlichen wenigstens eine Verdoppelung des Spannungshubs.

Eine vorteilhafte Ausgestaltung des erfindungsgemäßen Verfahrens sieht vor, dass, während die Spannungsverstärkungseinheit mit einem Spannungswert des Spannungssignals (U^{U}; U^{O}) beaufschlagt wird, in der Spannungsverstärkungseinheit mindestens eine Spannungsspeichereinheit mit dem Spannungssignal im Wesentlichen auf den anliegenden Spannungswert (U^{U}; U^{O}) aufgeladen wird, und dass, während die Spannungsverstärkungseinheit mit dem entsprechend anderen Spannungswert des Spannungssignals (U^{O}; U^{U}) beaufschlagt wird, die Spannungsverstärkungseinheit im Wesentlichen auf den anliegenden Spannungswert (U^{O}; U^{U}) umgeladen wird, und die piezo-elektrische Einheit von der Spannungsspeichereinheit im Wesentlichen mit der Differenzspannung des Spannungssignals (ΔU) beaufschlagt wird. In dieser Ausgestaltung wird also eine Spannungsspeichereinheit auf einen Spannungswert aufgeladen und anschließend auf den anderen Spannungswert umgeladen. Dadurch ergibt sich von dieser Spannungsspeichereinheit eine Spannung, die der Spannungsdifferenz (ΔU) des primären Spannungssignals entspricht. Je nach verwendeten Bauteilen können jedoch immer auch Verluste auftreten. Liegt die Spannungsspeichereinheit mit einem Anschluss wenigstens während gewisser Zeiten an einem der beiden Spannungswerte des primären Spannungssignals, so lässt sich ein entsprechend höherer Spannungswert erreichen. Bei einer Spannungsspeichereinheit kann es sich z.B. um einen Kondensator handeln. Ein Signalabschnitt des Spannungssignals (U) wird also direkt an den Ausgang oder die piezo-elektrische Einheit weitergereicht, d.h. sie wird direkt damit beaufschlagt. Während des folgenden Signalabschnittes, also während der zweiten Halbwelle des Spannungssignals (U), wird z.B. die piezo-elektrische Einheit mit der Spannungsdifferenz des Spannungssignals (ΔU) beaufschlagt, jedoch mit umgekehrten Vorzeichen, d.h. aus einem positiven Spannungswert wird ein negativer und aus einem negativen wird ein positiver. Der Betrag des Spannungswerts ist nicht unbedingt identisch mit dem Betrag der Spannungsdifferenz. Dies rührt von der Ausgestaltung der Spannungsverstärkungseinheit und der darin vorhandenen Bauteile und von der Art des Spannungssignals (U) her. Es wird also während der einen Halbwelle des primären Spannungssignals (U) das Signal nicht nur weiter an die piezo-elektrische Einheit geleitet, es wird auch in der Spannungsverstärkungseinheit gleichzeitig eine Spannungsspeichereinheit aufgeladen, die dann während der zweiten Halbwelle des Spannungssignals (U) die zweite Halbwelle des zweiten Spannungssignals (U₂) erzeugt. Dadurch lässt sich also eine Halbwelle des primären Spannungssignals (U) zweimal zur Ansteuerung der piezo-elektrischen Einheit verwenden. Einmal, indem direkt die piezo-elektrische Einheit angesteuert wird und ein zweites Mal, indem die mit der Spannung aufgeladene Spannungsspeichereinheit zur Ansteuerung benutzt wird. Die Vorzeichen der Spannungswerte des zweiten Spannungssignals sind jeweils so zu wählen, dass sich ein optimaler Spannungshub ergibt.

Die Aufgabe bezieht sich weiterhin auf ein Feldgerät zur Bestimmung und/oder Überwachung einer Prozessgröße eines Mediums, mit einer piezo-elektrischen Einheit, mit einer mechanisch schwingfähigen Einheit, wobei die piezo-elektrische Einheit mit der mechanisch schwingfähigen Einheit gekoppelt ist, und wobei die piezo-elektrische Einheit die mechanisch schwingfähige Einheit zu Schwingungen anregt, bzw. wobei die piezo-elektrische Einheit Schwingungen der mechanisch schwingfähigen Einheit empfängt.

Die Aufgabe wird bezüglich des Feldgerätes erfindungsgemäß dadurch gelöst, dass eine Spannungsverstärkungseinheit mit einem Eingang und einem Ausgang vorgesehen ist, deren Eingang mit einem Spannungssignal (U) beaufschlagbar ist, und deren Ausgang mit der piezo-elektrischen Einheit verbunden ist, wobei das Spannungssignal (U) zwischen zwei annährend konstanten Spannungswerten (U^{U}; U^{O}) mit einer Differenzspannung (ΔU) zwischen den beiden Spannungswerten (U^{U}; U^{O}) alterniert, dass in der Spannungsverstärkungseinheit mindestens eine Spannungsspeichereinheit mit zwei Seiten vorgesehen ist, die im Wesentlichen auf einen Spannungswert (U^{U}; U^{O}) des Spannungssignals aufladbar ist, und die im Wesentlichen auf den entsprechend anderen Spannungswert (U^{O}; U^{U}) des Spannungssignals derart umladbar ist, dass im Wesentlichen die Differenzspannung des Spannungssignals (ΔU) von der Spannungsspeichereinheit abgreifbar ist, wobei die erste Seite der Spannungsspeichereinheit mit dem Eingang verbunden ist, und dass die Spannungsverstärkungseinheit mindestens eine erste, eine zweite und eine dritte Schaltereinheit aufweist, wobei die erste Schaltereinheit den Ausgang mit dem Eingang verbindet, wenn ein Spannungswert (U^{O}) am Eingang anliegt, wobei die zweite Schaltereinheit den Ausgang mit der zweiten Seite der Spannungsspeichereinheit verbindet, wenn der andere Spannungswerte (U^{U}) am Eingang anliegt, und wobei die dritte Schaltereinheit die zweite Seite der Spannungsspeichereinheit mit einem Spannungswert im Wesentlichen zwischen dem anderen Spannungswert (U^{U}) und Masse verbindet, wenn der eine Spannungswerte (U^{O}) am Eingang (10.1) anliegt. In der Spannungsverstärkungseinheit wird also eine Spannungsspeichereinheit mindestens auf einen Spannungswert des Spannungssignals (U) aufgeladen. In dem Fall, dass der andere Spannungswert zumindest zu den Zeiten, in welchen die Spannungsspeichereinheit aufgeladen wird, ebenfalls an der Spannungsspeichereinheit anliegt, z.B. als eine konstante Spannungsversorgung, so kann die Spannungsspeichereinheit auch auf die Spannungsdifferenz des primären Spannungssignals aufgeladen werden. Es sind natürlich auch andere Werte in Abhängigkeit von der Spannung möglich, mit der die Spannungsverstärkungseinheit ebenfalls versorgt werden kann. Beispielsweise durch eine Schaltereinheit wird die Spannungsspeichereinheit mit dem Ausgang der Spannungsverstärkungseinheit verbunden. Gleichzeitig wird die Spannungsspeichereinheit mit dem anderen Spannungswert des Spannungssignals verbunden, d.h. sie wird umgeladen. Damit wird der Ausgang der Spannungsspeichereinheit mindestens mit der Spannungsdifferenz des Spannungssignals beaufschlagt. Dadurch, dass die Spannungsspeichereinheit leitend mit dem Ausgang der Spannungsverstärkungseinheit verbunden ist, fließt auch ein Entladestrom. Damit ergeben sich jedoch auch Auswirkungen auf die Entladespannung der Spannungsspeichereinheit. Auf dieses Problem werden die folgenden Ausgestaltungen eingehen.

Eine Ausgestaltung beinhaltet, dass die dritte Schaltereinheit die zweite Seite der Spannungsspeichereinheit im Wesentlichen mit dem anderen Spannungswert (U^{U}) verbindet, wenn der eine Spannungswerte (U^{O}) am Eingang anliegt. In dieser Ausgestaltung ist keine dritte Spannungsquelle bzw. kein drittes Potential erforderlich, welches zwischen Masse und dem anderen Spannungswert (U^{U}) liegt.

Eine Ausgestaltung sieht vor, dass die dritte Schaltereinheit die zweite Seite der Spannungsspeichereinheit im Wesentlichen mit Masse verbindet, wenn der eine Spannungswerte (U^{O}) am Eingang anliegt. Eine Erdung ist in den meisten Ausgestaltungen von elektronischen Einheiten vorhanden, so dass eine Verbindung mit Masse relativ einfach zu realisieren ist. In dieser Ausgestaltung wird also quasi der obere Spannungswert (U^{O}) durch die Spannungsverstärkereinheit gespiegelt.

Eine vorteilhafte Ausgestaltung des erfindungsgemäßen Feldgerätes sieht vor, dass es sich bei der Spannungsspeichereinheit um einen Kondensator handelt. Ein Kondensator als Spannungsspeichereinheit ist die einfachste Ausgestaltung. Der Kondensator wird, während ein Spannungswert anliegt, aufgeladen, d.h. er weist zwei Potentiale mit einer u.a. durch den Spannungswert gegebenen Differenz auf. Liegt dann der andere Spannungswert an dem einen Potential, so wird das andere Potential auf einen anderen Wert gezwungen, wobei die Potentialdifferenz beibehalten wird.

Eine vorteilhafte Ausgestaltung sieht vor, dass die Frequenz des Spannungssignals (U) und die Ausgestaltung der Spannungsverstärkungseinheit derartig aufeinander abgestimmt sind, dass die Entladespannung der Spannungsspeichereinheit während annährend einer halben Periodendauer des Spannungssignals (U) annährend konstant ist. Bei der Frequenz des Spannungssignals (U) handelt es sich üblicherweise um die Frequenz, mit welcher die piezo-elektrische Einheit und somit die mechanisch schwingfähige Einheit schwingen soll. Ist die Entladespannung wenigstens annährend konstant, so ergibt sich als Ansteuersignal bei der piezo-elektrischen Einheit auch ein Rechtecksignal. Eine genauere Formulierung der Bedingung für eine annährend konstante Entladespannung ist, dass die halbe Periodendauer des Spannungssignals viel kleiner sein muss als die Endladedauer des Kondensators oder die Entladezeitkonstante bei ohmscher Last.

Eine Ausgestaltung beinhaltet, dass die Kapazität der Spannungsspeichereinheit größer ist als die Kapazität der piezo-elektrischen Einheit. Die Entladedauer z.B. des Kondensators ergibt sich aus seiner Kapazität und dem Widerstandswert des Lastwiderstandes, über den der Kondensator entladen wird. Hier handelt es sich bei dem Lastwiderstand um die piezo-elektrische Einheit, weshalb sich die Bedingung ergibt, dass die Kapazität des Kondensators in der Spannungsverstärkungseinheit größer sein muss als die Kapazität der piezo-elektrischen Einheit.

Die Erfindung wird anhand der nachfolgenden Zeichnungen näher erläutert. Es zeigt:
Fig. 1: ein Blockschaltbild des Feldgerätes;
Fig. 2: eine Blockschaltung der Spannungsverstärkungseinheit;
Fig. 3a und 3b zeitliche Verläufe der Spannungssignale U und U₂;
Fig. 4: eine detailliertere Ausgestaltung des Boosters in einer ersten Variante;
Fig. 5: eine detailliertere Ausgestaltung des Boosters in einer zweiten Variante; und
Fig. 6 eine detailliertere Ausgestaltung des Boosters in einer dritten Variante.

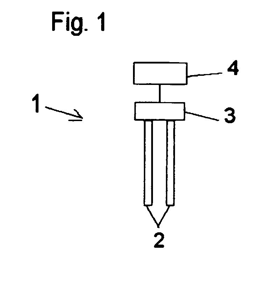

Fig. 1 zeigt ein Blockschaltbild einer Ausgestaltung des Feldgerätes 1, die sich am Liquiphanten, der von der Anmelderin produziert und vertrieben wird, anlehnt. Eine mechanisch schwingfähige Einheit 2 - hier eine Schwinggabelist verbunden mit einer Antriebs-/Empfangseinheit 3. Die Schwingungen der mechanisch schwingfähigen Einheit 2 werden von einer Regel-/Auswerteeinheit 4 geregelt bzw. die Schwingungen der schwingfähigen Einheit 5 werden von der Regel-/Auswerteeinheit 4 auswertet, um z.B. daraus den Füllstand eines Mediums in einem Behälter (nicht dargestellt) zu bestimmen.

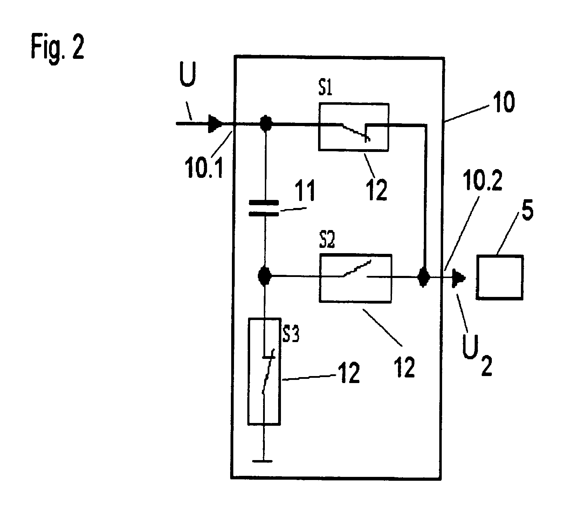

In Fig. 2 ist der prinzipielle Aufbau einer Ausgestaltung der Spannungsverstärkungseinheit 10 mit einem Eingang 10.1 und einem Ausgang 10.2 dargestellt. Die Spannungsverstärkungseinheit 10 wird mit dem primären Spannungssignal U, welches zwischen den beiden annährend konstanten Spannungswerten (U^{U}; U^{O}) alterniert, beaufschlagt und beaufschlagt wiederum die piezo-elektrische Einheit 5 mit einem zweiten Spannungssignal U₂, welches zwischen den beiden annährend konstanten Spannungswerten (U₂^{U}; U₂^{O}) alterniert. Die Spannungsverstärkungseinheit 10 und die piezo-elektrische Einheit 5 befinden sich also vorzugsweise in der Antriebs-/Empfangseinheit 3. Die Spannungsverstärkungseinheit 10 verfügt über eine Spannungsspeichereinheit 11, die hier als Kondensator ausgestaltet ist, sowie in dieser Ausgestaltung über drei Schaltereinheiten 12: S1, S2 und S3. Der Kondensator ist auf einer Seite mit dem Eingang 10.1 und mit der anderen Seite mit dem Schalter S3 verbunden. Liegt beispielsweise der obere Spannungswert U^{O} des primären Spannungssignals U am Eingang 10.1 der Spannungsverstärkungseinheit 10 an, so sind die Schaltereinheiten S1 und S3 geschlossen, die Schaltereinheit S2 ist geöffnet. Dies bewirkt, dass die piezo-elektrische Einheit 5 ebenfalls mit dem Spannungssignal U beaufschlagt wird. Somit ergibt sich - vorausgesetzt der Betrag von U^{O} ist größer als der Betrag von U^{U} - der obere Spannungswert U₂^{O} des zweiten Spannungssignals U₂ direkt aus dem oberen Spannungswert U^{O} des primären Spannungssignals U. Weiterhin wird die Spannungsspeichereinheit 11 gegen Masse (dies ist dann sinnvoll, wenn beispielsweise U^{O} Masse ist) auf den oberen Spannungswert U^{O} aufladen. Liegt der untere Spannungswert U^{U} - also im Beispiel Massean der Spannungsverstärkungseinheit 10 an, so sind die Schaltereinheiten S1 und S3 geöffnet und der Schalter S2 ist geschlossen. Die Spannungsspeichereinheit 11 wird umgeladen und liegt gleichzeitig an der piezo-elektrischen Einheit 5 an. Während also Masse an der Spannungsverstärkungseinheit 10 anliegt, wird die piezo-elektrische Einheit 5 mit dem mit umgekehrten Vorzeichen versehenen Spannungswert U^{O}, der in diesem Fall identisch mit der Differenzspannung des primären Spannungssignals ΔU ist, beaufschlagt. Das zweite Spannungssignal U₂, mit dem die Spannungsverstärkungseinheit 10 die piezo-elektrische Einheit 5 beaufschlagt, hat somit einen oberen und einen unteren Spannungswert, deren Beträge im Wesentlichen dem oberen Spannungswert U^{O} - diese sei hier der betraglich höhere Wert - und der Spannungsdifferenz ΔU des primären Spannungssignals entsprechen. Im diskutierten Fall mit dem unteren Spannungswert des Spannungssignals U^{U} = 0, handelt es sich bei der Spannungsdifferenz um den oberen Spannungswert des Spannungssignals U^{O}.

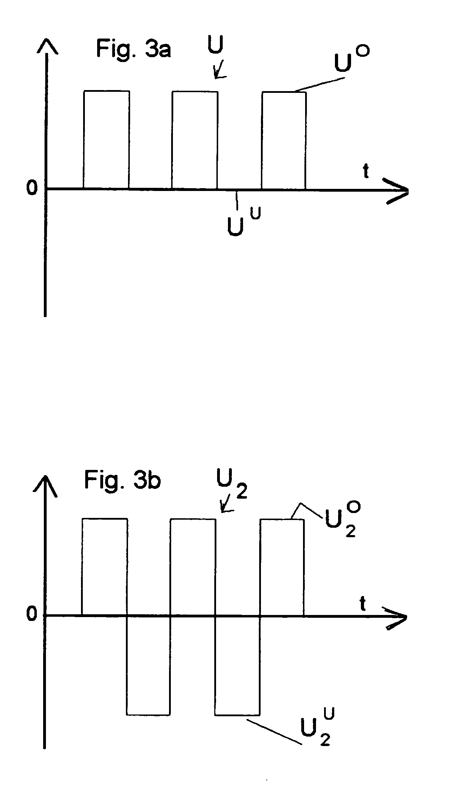

In den Fign. 3a und 3b sind exemplarisch die zeitlichen Verläufe der Spannungssignale U und U₂ dargestellt. In beiden Fällen handelt es sich um Rechtecksignale. Die Spannungsdifferenz des zweiten Spannungssignals ΔU₂ ist hier doppelt so groß wie die des primären Spannungssignals ΔU, da U^{U} = 0 V ist.

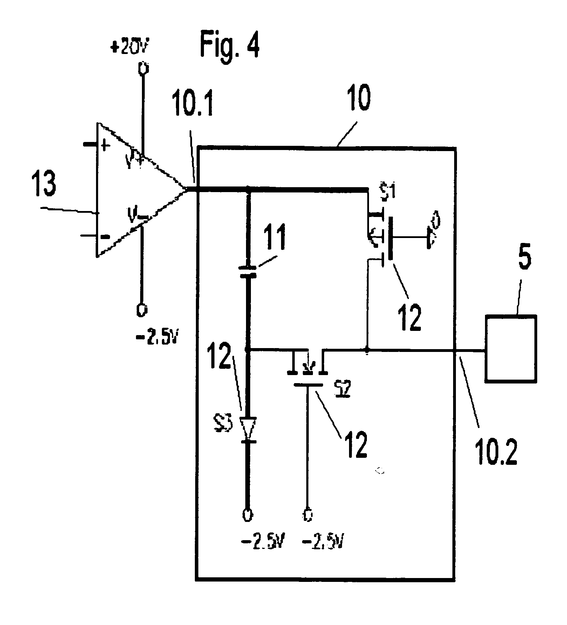

In Fig. 4 ist eine detaillierte Darstellung der Spannungsverstärkungseinheit 10 zu sehen. Die Schaltereinheiten S1 und S2 sind hier als MOSFETs ausgestaltet und bei der Schaltereinheit S3 handelt es sich um eine Diode. Am Eingang der Spannungsverstärkungseinheit 10 ist ein Operationsverstärker 13 dargestellt, der das Spannungssignal U erzeugt. Als Beispiel sei ein Fall diskutiert, in dem der obere Spannungswert U^{O} +20 V und der untere Wert U^{U} -2,5 V beträgt. Das Gate des p-Kanal MOSFETs S1 liegt an Masse, das Gate des n-Kanal MOSFETs S2 liegt an -2,5 V. Die Diode S3 wiederum ist ebenfalls mit -2.5 V verbunden. Liegt der obere Spannungswert U^{O} mit +20 V an der Spannungsverstärkungseinheit 10, so ist die Schaltereinheit S1 leitend, ebenfalls die Schaltereinheit S3. Der Verlust der Diode S3 beträgt beispielsweise 0,7 V. Der MOSFET S2 sperrt, da sein Gate auf -2,5 V negativer als sein Source mit -2,5 V + 0,7 V = -1,8 V ist. Somit lädt sich der Kondensator 11 auf 20 V + 2,5 V - 0,7 V = 21,8 V auf. Liegt der untere Spannungswert U^{U} von -2,5 V an der Spannungsverstärkungseinheit 10 an, so sperrt der MOSFET S1. Der eine Anschluss des Kondensators 11 wird auf - 2,5 V gezwungen, womit sich das Spannungspotential des anderen Anschlusses auf -24,3 V verschiebt. Die Diode S3 sperrt und der MOSFET S2 wird leitend und gibt die Spannung von -24,3 V als unteren Spannungswert U₂^{U} des zweiten Spannungssignals U₂ an die piezo-elektrische Einheit 5 weiter. Der Kondensator 11 wird durch einen aus dem Ausgang fließenden Strom entladen. Hieraus ergibt sich eine Bedingung für die Kapazität C des Kondensators 11, wenn sich die Spannung von -24,3 V während einer negativen Halbwelle des primären Spannungssignals U nicht nennenswert ändern soll: T/2 << τ, d.h. die halbe Periodendauer des primären Spannungssignals U muss für eine ohmsche Last viel kleiner als die Ladekonstante aus der Kapazität C des Kondensators 11 und dem Lastwiderstand am Ausgang sein. Wenn am Ausgang eine kapazitive Last (die piezo-elektrische Einheit 5) angeschlossen ist, gilt C >> Cₗₐₛₜ, d.h. der Kondensator in der Schaltung muss viel größer als die Lastkapazität (die Kapazität Cₗₐₛₜ der piezo-elektrischen Einheit) sein.

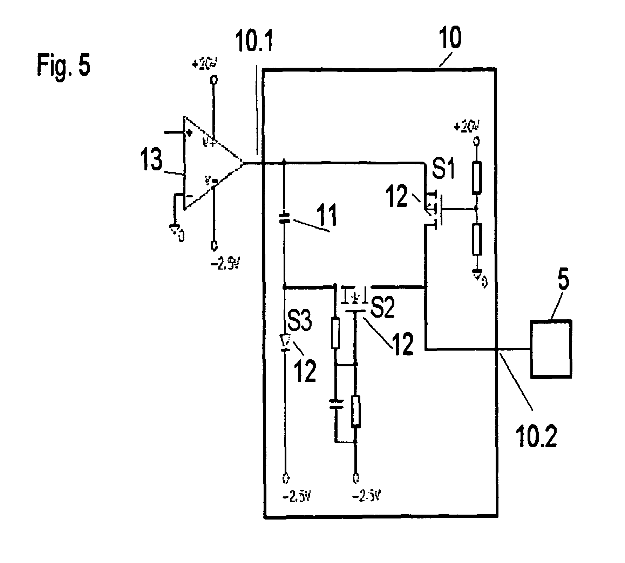

In der Fig. 5 ist eine weitere Ausgestaltung der Spannungsverstärkungseinheit 10 dargestellt. In dieser Schaltung werden durch die zusätzlichen Bauteile-Widerstände und Kondensatoren bei den Schalteinheiten 12: S1 und S2 - die Übernahmeverzerrungen minimiert, die entstehen, wenn S1 leitend wird und S2 sperrt und umgekehrt. Diese Übernahmeverzerrungen hängen u.a. von der Geschwindigkeit der verwendeten FETs und z.B. der Gatevorspannung ab und sind nicht prinzipieller Natur.

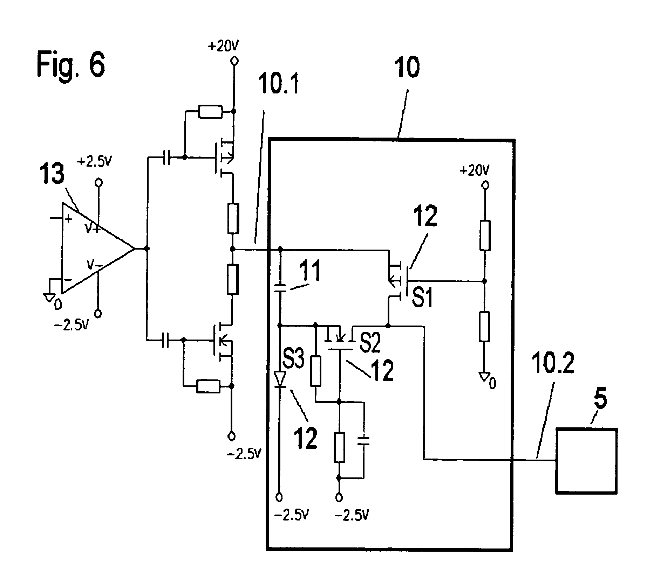

Fig. 6 zeigt eine weitere Variante, in welcher durch den Operationsverstärker 13 ein Signal erzeugt wird mit den beiden konstanten Spannungswerten +2.5 V und -2.5 V. Durch die Schaltung der Bauteile vor der Spannungsverstärkungseinheit wird aus diesem Signal ein Signal erzeugt, welches zwischen -2.5 V und +20 V alterniert. Dafür funktionieren die beiden FETs als Schalter. Die Kondensatoren laden sich jeweils gegen die anliegenden Spannungswerte auf. Das eigentliche Signal mit der Schwingungsfrequenz wird also durch den Operationsverstärker 13 erzeugt und die Transformation der Signalen auf -2.5 V und +20 V erfolgt durch die anschließende Schaltung vor der eigentlichen Spannungsverstärkungseinheit 10. Der Vorteil dieser Ausgestaltung ist, dass der Spannungsbereich +- 2.5 V durch die meisten Operationsverstärker abzudecken ist. Die Ausgestaltung der Spannungsverstärkungseinheit 10 entspricht der Ausgestaltung in Fig. 5.

### Bezugszeichenliste

- 1: Feldgerät
- 2: Mechanisch schwingfähigen Einheit
- 3: Antriebs-/Empfangseinheit
- 4: Regel-/Auswerteeinheit
- 5: Piezo-elektrische Einheit
- 10: Spannungsverstärkungseinheit
- 10.1: Eingang
- 10.2: Ausgang
- 11: Spannungsspeichereinheit
- 12: Schaltereinheit
- 13: Operationsverstärker

## Patentansprüche

1. Verfahren zur Ansteuerung einer piezo-elektrischen Einheit (5) in einem Feldgerät (1) zur Bestimmung und/oder Überwachung einer Prozessgröße eines Mediums,
wobei die piezo-elektrische Einheit (5) mit einer mechanisch schwingfähigen Einheit (2) gekoppelt ist,
wobei die piezo-elektrische Einheit (5) zu Schwingungen angeregt wird, bzw. wobei die Schwingungen der piezo-elektrischen Einheit (5) detektiert werden,
**dadurch gekennzeichnet,**
**dass** eine Spannungsverstärkungseinheit (10) mit einem Eingang (10.1) und einem Ausgang (10.2) vorgesehen ist, deren Eingang (10.1) mit einem Spannungssignal (U) beaufschlagt wird, und deren Ausgang (10.2) mit der piezo-elektrischen Einheit (5) verbunden ist,
wobei das Spannungssignal (U) zwischen zwei annährend konstanten Spannungswerten (U^{U}; U^{O}) mit einer Differenzspannung (ΔU) zwischen den beiden Spannungswerten (U^{U}; U^{O}) alterniert,
**dass** in der Spannungsverstärkungseinheit (10) mindestens eine Spannungsspeichereinheit (11) mit zwei Seiten vorgesehen ist, die auf einen Spannungswert (U^{U}; U^{O}) des Spannungssignals aufgeladen wird, und die auf den entsprechend anderen Spannungswert (U^{O}; U^{U}) des Spannungssignals derart umgeladen wird, dass die Differenzspannung des Spannungssignals (ΔU) von der Spannungsspeichereinheit (11) abgegriffen wird, wobei die erste Seite der Spannungsspeichereinheit (11) mit dem Eingang (10.1) verbundne ist,
**dass** die Spannungsverstärkungseinheit (10) mindestens eine erste (S1), eine zweite (S2) und eine dritte Schaltereinheit (S3) aufweist,
wobei die erste Schaltereinheit (S1) den Ausgang (10.2) mit dem Eingang (10.1) verbindet, wenn ein Spannungswert (U^{O}) am Eingang (10.1) anliegt,
wobei die zweite Schaltereinheit (S2) den Ausgang (10.2) mit der zweiten Seite der Spannungsspeichereinheit (11) verbindet, wenn der andere Spannungswert (U^{U}) am Eingang (10.1) anliegt,
und
wobei die dritte Schaltereinheit (S3) die zweite Seite der
Spannungsspeichereinheit (11) mit einem Spannungswert zwischen dem anderen Spannungswert (U^{U}) und Masse verbindet, wenn der eine Spannungswerte (U^{O}) am Eingang (10.1) anliegt.

2. Verfahren nach Anspruch 1,
**dadurch gekennzeichnet,**
**dass,** während die Spannungsverstärkungseinheit (10) mit einem Spannungswert des Spannungssignals (U^{U}; U^{O}) beaufschlagt wird, in der Spannungsverstärkungseinheit (10) mindestens die Spannungsspeichereinheit (11) mit dem Spannungssignal auf den anliegenden Spannungswert (U^{U}; U^{O}) aufgeladen wird,
und
**dass**, während die Spannungsverstärkungseinheit (10) mit dem entsprechend anderen Spannungswert des Spannungssignals (U^{O}; U^{U}) beaufschlagt wird, die Spannungsverstärkungseinheit (10) auf den anliegenden Spannungswert (U^{O}; U^{U}) umgeladen wird, und die piezo-elektrische Einheit (5) von der Spannungsspeichereinheit (11) mit der Differenzspannung des Spannungssignals (ΔU) beaufschlagt wird.

3. Feldgerät (1) zur Bestimmung und/oder Überwachung einer Prozessgröße eines Mediums,
mit einer piezo-elektrischen Einheit (5),
mit einer mechanisch schwingfähigen Einheit (2),
wobei die piezo-elektrische Einheit (5) mit der mechanisch schwingfähigen Einheit (2) gekoppelt ist,
und
wobei die piezo-elektrische Einheit (5) die mechanisch schwingfähige Einheit (2) zu Schwingungen anregt, bzw. wobei die piezo-elektrische Einheit (5) Schwingungen der mechanisch schwingfähigen Einheit (2) empfängt,
**dadurch gekennzeichnet,**
**dass** eine Spannungsverstärkungseinheit (10) mit einem Eingang (10.1) und einem Ausgang (10.2) vorgesehen ist, deren Eingang (10.1) mit einem Spannungssignal (U) beaufschlagbar ist, und deren Ausgang (10.2) mit der piezo-elektrischen Einheit (2) verbunden ist,
wobei das Spannungssignal (U) zwischen zwei annährend konstanten Spannungswerten (U^{U}; U^{O}) mit einer Differenzspannung (ΔU) zwischen den beiden Spannungswerten (U^{U}; U^{O}) alterniert,
**dass** in der Spannungsverstärkungseinheit (10) mindestens eine Spannungsspeichereinheit (11) mit zwei Seiten vorgesehen ist, die auf einen Spannungswert (U^{U}; U^{O}) des Spannungssignals aufladbar ist, und die auf den entsprechend anderen Spannungswert (U^{O}; U^{U}) des Spannungssignals derart umladbar ist, dass die Differenzspannung des Spannungssignals (ΔU) von der Spannungsspeichereinheit (11) abgreifbar ist,
wobei die erste Seite der Spannungsspeichereinheit (11) mit dem Eingang (10.1) verbunden ist,
und
**dass** die Spannungsverstärkungseinheit (10) mindestens eine erste (S1), eine zweite (S2) und eine dritte Schaltereinheit (S3) aufweist,
wobei die erste Schaltereinheit (S1) den Ausgang (10.2) mit dem Eingang (10.1) verbindet, wenn ein Spannungswert (U^{O}) am Eingang (10.1) anliegt,
wobei die zweite Schaltereinheit (S2) den Ausgang (10.2) mit der zweiten Seite der Spannungsspeichereinheit (11) verbindet, wenn der andere Spannungswert (U^{U}) am Eingang (10.1) anliegt,
und
wobei die dritte Schaltereinheit (S3) die zweite Seite der
Spannungsspeichereinheit (11) mit einem Spannungswert zwischen dem anderen Spannungswert (U^{U}) und Masse verbindet, wenn der eine Spannungswert (U^{O}) am Eingang (10.1) anliegt.

4. Feldgerät (1) nach Anspruch 3,
**dadurch gekennzeichnet,**
**dass** die dritte Schaltereinheit (S3) die zweite Seite der Spannungsspeichereinheit (11) mit dem anderen Spannungswert (U^{U}) verbindet, wenn der eine Spannungswerte (U^{O}) am Eingang (10.1) anliegt.

5. Feldgerät (1) nach Anspruch 3,
**dadurch gekennzeichnet,**
**dass** die dritte Schaltereinheit (S3) die zweite Seite der Spannungsspeichereinheit (11) mit Masse verbindet, wenn der eine Spannungswerte (U^{O}) am Eingang (10.1) anliegt.

6. Feldgerät (1) nach Anspruch 3,
**dadurch gekennzeichnet,**
**dass** es sich bei der Spannungsspeichereinheit (11) um einen Kondensator handelt.

7. Feldgerät (1) nach Anspruch 3 oder 6,
**dadurch gekennzeichnet,**
**dass** die Frequenz des Spannungssignals (U) und die Ausgestaltung der Spannungsverstärkungseinheit (10) derartig aufeinander abgestimmt sind, dass die Entladespannung der Spannungsspeichereinheit (11) während annährend einer halben Periodendauer des Spannungssignals (U) annährend konstant ist.

8. Feldgerät (1) nach Anspruch 7,
**dadurch gekennzeichnet,**
**dass** die Kapazität der Spannungsspeichereinheit (11) größer ist als die Kapazität der piezo-elektrischen Einheit (5).

## Claims

1. Process for controlling a piezoelectric unit (5) in a field device (1) for determining and/or monitoring a process variable of a medium,
whereby said piezoelectric unit (5) is coupled with a unit (2) capable of mechanical oscillation,
whereby the piezoelectric unit (5) is excited to oscillate, or the oscillations of the piezoelectric unit (5) are detected,
**characterized in that:**
- a voltage amplification unit (10) is provided with an input (10.1) and an output (10.2), where the input (10.1) is exposed to a voltage signal (U) and the output (10.2) is connected to the piezoelectric unit (5)
where the voltage signal (U) alternates between two practically constant voltage values (U^{u}; U^{o}) with a differential voltage (ΔU) between the two voltage values (U^{u}; U^{o})
- at least one voltage storage unit (11), with two sides, is provided in the voltage amplification unit (10) and this voltage storage unit (11) is charged to a voltage value (U^{u}; U^{o}) of the voltage signal and undergoes charge reversal to the other voltage value (U^{o}; U^{u}) of the voltage signal in such a way that the differential voltage of the voltage signal (ΔU) is measured by the voltage storage unit (11), whereby the first side of the voltage storage unit (11) is connected to the input (10.1)
- the voltage amplification unit (10) exhibits at least a first (S1), a second (S2) and a third switch unit (S3), whereby the first switch unit (S1) connects the output (10.2) to the input (10.1) if a voltage value (U^{o}) is present at the input (10.1), whereby the second switch unit (S2) connects the output (10.2) to the second side of the voltage storage unit (11) if the other voltage value (U^{u}) is present at the input (10.1), and whereby the third switch unit (S3) connects the second side of the voltage storage unit (11) to a voltage value between the other voltage value (U^{u}) and ground if the voltage value (U^{o}) is present at the input (10.1).

2. Process as per Claim 1, **characterized in that:**
- while the voltage amplification unit (10) is exposed to a voltage value of the voltage signal (U^{u}; U^{o}), in the voltage amplification unit (10) the voltage storage unit (11) at least is charged with the voltage signal to the voltage value present (U^{u}; U^{o})
and
- while the voltage amplification unit (10) is exposed to the other voltage value of the voltage signal (U^{o}; U^{u}), the voltage amplification unit (10) undergoes charge reversal to the voltage value present (U^{o}; U^{u}) and the voltage storage unit (11) exposes the piezoelectric unit (5) to the differential voltage of the voltage signal (ΔU).

3. Field device (1) for determining and/or monitoring a process variable of a medium, with a piezoelectric unit (5),
with a unit (2) capable of mechanical oscillation,
whereby the piezoelectric unit (5) is coupled with the unit (2) capable of mechanical oscillation
and
whereby the piezoelectric unit (5) excites the unit (2), which is capable of mechanical oscillation, to oscillate, or where the piezoelectric unit (5) receives oscillations from the unit (2), which is capable of mechanical oscillation, **characterized in that:**
- a voltage amplification unit (10) is provided with an input (10.1) and an output (10.2), whereby the input (10.1) can be exposed to a voltage signal (U), and where the output (10.2) is connected to the piezoelectric unit (5), where said voltage signal (U) alternates between two practically constant voltage values (U^{u}; U^{o}) with a differential voltage (ΔU) between the two voltage values (U^{u}; U^{o})
- at least one voltage storage unit (11) with two sides is provided in the voltage amplification unit (10) and said voltage storage unit (11) can be charged to a voltage value (U^{u}; U^{o}) of the voltage signal, and which can undergo charge reversal to the other voltage value (U^{o}; U^{u}) of the voltage signal in such a way that the differential voltage of the voltage signal (ΔU) can be measured by the voltage storage unit (11), whereby the first side of the voltage storage unit (11) is connected to the input (10.1)
- the voltage amplification unit (10) exhibits at least a first (S1), a second (S2) and a third switch unit (S3), whereby the first switch unit (S1) connects the output (10.2) to the input (10.1) if a voltage value (U^{o}) is present at the input (10.1), whereby the second switch unit (S2) connects the output (10.2) to the second side of the voltage storage unit (11) if the other voltage value (U^{u}) is present at the input (10.1), and whereby the third switch unit (S3) connects the second side of the voltage storage unit (11) with a voltage value between the other voltage value (U^{u}) and ground if the voltage value (U^{o}) is present at the input (10.1).

4. Field device (1) as per Claim 3, **characterized in that:**
- the third switch unit (S3) connects the second side of the voltage storage unit (11) to the other voltage value (U^{u}) if the voltage value (U^{o}) is present at the input (10.1).

5. Field device (1) as per Claim 3, **characterized in that:**
- the third switch unit (S3) connects the second side of the voltage storage unit (11) to ground if the voltage value (U^{o}) is present at the input (10.1).

6. Field device (1) as per Claim 3, **characterized in that:**
- the voltage storage unit (11) is a capacitor.

7. Field device (1) as per Claim 3 or 6, **characterized in that:**
- the frequency of the voltage signal (U) and the design of the voltage amplification unit (10) are matched in such a way that the discharge voltage of the voltage storage unit (11) is practically constant for almost a half-period duration of the voltage signal (U).

8. Field device (1) as per Claim 7, **characterized in that:**
- the capacitance of the voltage storage unit (11) is greater than the capacitance of the piezoelectric unit (5).

## Revendications

1. Procédé destiné à la commande d'une unité piézoélectrique (5) dans un appareil de terrain (1) en vue de la détermination et/ou de la surveillance d'une grandeur process d'un produit,
l'unité piézoélectrique (5) étant couplée avec une unité (2) apte à vibrer mécaniquement, l'unité piézoélectrique (5) étant excitée en vibrations ou les vibrations de l'unité piézoélectrique (5) étant détectées,
**caractérisé en ce que/qu'**
est prévue une unité d'amplification de tension (10) pourvue d'une entrée (10.1) et d'une sortie (10.2), dont l'entrée (10.1) est alimentée par un signal de tension (U) et dont la sortie (10.2) est reliée avec l'une unité piézoélectrique (5),
le signal de tension (U) alternant entre deux valeurs de tension (U^{U} ; U⁰) quasi constantes avec une tension différentielle (ΔU) entre les deux valeurs de tension (U^{U} ; U⁰),
dans l'unité d'amplification de tension (10) est prévue au moins une unité d'accumulation de tension (11) avec deux côtés, qui est chargée à une valeur de tension (U^{U} ; U^{O}) du signal de tension, et dont la charge est transférée sur l'autre valeur de tension (U ; U^{O}) correspondante du signal de tension de telle manière que la tension différentielle du signal de tension (ΔU) soit prélevée par l'unité d'accumulation de tension (11),
le premier côté de l'unité d'accumulation de tension (11) étant relié avec l'entrée (10.1), l'unité d'amplification de tension (10) présente au moins une première unité de commutation (S1), une deuxième unité de commutation (S2) et une troisième unité de commutation (S3),
la première unité de commutation (S1) reliant la sortie (10.2) à l'entrée (10.1) lorsqu'une valeur de tension (U^{O}) est appliquée à l'entrée (10.1), la deuxième unité de commutation (S2) reliant la sortie (10.2) au deuxième côté de l'unité d'accumulation de tension (11) lorsque l'autre valeur de tension (U^{U}) est appliquée à l'entrée (10.1),
et
la troisième unité de commutation (S3) reliant le deuxième côté de l'unité d'accumulation de tension (11) avec une valeur de tension comprise entre l'autre valeur de tension (U^{U}) et la masse lorsque la première valeur de tension (U^{O}) est appliquée à l'entrée (10.1).

2. Procédé selon la revendication 1
**caractérisé en ce que**
pendant que l'unité d'amplification de tension (10) est alimentée par une valeur de tension du signal de tension (U^{U} ; U^{O}), dans l'unité d'amplification de tension (10), au moins l'unité d'accumulation de tension (11) est chargée avec le signal de tension à la valeur de tension (U^{U} ; U^{O}) appliquée,
et
pendant que l'unité d'amplification de tension (10) est alimentée avec l'autre valeur de tension correspondante du signal de tension (U^{U} ; U^{O}), la charge de l'unité d'amplification de tension (10) est transférée à la valeur de tension (U^{U} ; U^{O}) présente, et l'unité piézoélectrique (5) est alimentée par l'unité d'accumulation de tension (11) avec la tension différentielle du signal de tension (ΔU).

3. Appareil de terrain (1) destiné à la détermination et/ou la surveillance d'une grandeur process d'un produit,
avec une unité piézoélectrique (5),
avec une unité (2) apte à vibrer mécaniquement,
l'unité piézoélectrique (5) étant couplée avec l'unité (2) apte à vibrer mécaniquement,
et
l'unité piézoélectrique (5) excitant l'unité (2) apte à vibrer mécaniquement en des vibrations, ou l'unité piézoélectrique (5) recevant les vibrations de l'unité (2) apte à vibrer mécaniquement,
**caractérisé en ce que/qu'**
est prévue une unité d'amplification de tension (10) pourvue d'une entrée (10.1) et d'une sortie (10.2), dont l'entrée (10.1) peut être alimentée par un signal de tension (U) et dont la sortie (10.2) est reliée avec l'une unité piézoélectrique (5),
le signal de tension (U) alternant entre deux valeurs de tension (U^{U} ; U^{O}) quasi constantes avec une tension différentielle (ΔU) entre les deux valeurs de tension (U^{U} ; U^{O}),
dans l'unité d'amplification de tension (10) est prévue au moins une unité d'accumulation de tension (11) avec deux côtés, qui peut être chargée à une valeur de tension (U^{U} ; U^{O}) du signal de tension, et dont la charge peut être transférée sur l'autre valeur de tension (U^{U} ; U^{O}) correspondante du signal de tension de telle manière que la tension différentielle du signal de tension (ΔU) puisse être prélevée par l'unité d'accumulation de tension (11),
le premier côté de l'unité d'accumulation de tension (11) étant relié avec l'entrée (10.1), et
que l'unité d'amplification de tension (10) présente au moins une première unité de commutation (S1), une deuxième unité de commutation (S2) et une troisième unité de commutation (S3),
la première unité de commutation (S1) reliant la sortie (10.2) à l'entrée (10.1) lorsqu'une valeur de tension (U^{O}) est appliquée à l'entrée (10.1),
la deuxième unité de commutation (S2) reliant la sortie (10.2) au deuxième côté de l'unité d'accumulation de tension (11) lorsque l'autre valeur de tension (U^{U}) est appliquée à l'entrée (10.1),
et
la troisième unité de commutation (S3) reliant le deuxième côté de l'unité d'accumulation de tension (11) avec une valeur de tension comprise entre l'autre valeur de tension (U^{U}) et la masse lorsque la première valeur de tension (U^{O}) est appliquée à l'entrée (10.1).

4. Appareil de terrain (1) selon la revendication 3,
**caractérisé en ce que**
la troisième unité de commutation (S3) relie le deuxième côté de l'unité d'accumulation de tension (11) avec l'autre valeur de tension (U^{U}) lorsque la valeur de tension (U^{O}) est appliquée à l'entrée (10.1).

5. Appareil de terrain (1) selon la revendication 3,
**caractérisé en ce que**
la troisième unité de commutation (S3) relie le deuxième côté de l'unité d'accumulation de tension (11) avec la masse lorsque la valeur de tension (U^{O}) est appliquée à l'entrée (10.1).

6. Appareil de terrain (1) selon la revendication 3,
**caractérisé en ce que**
concernant l'unité d'accumulation de tension (11), il s'agit d'un condensateur.

7. Appareil de terrain (1) selon la revendication 3 ou 6,
**caractérisé en ce que**
la fréquence du signal de tension (U) et le dimensionnement de l'unité d'amplification de tension (10) sont assortis de telle manière que la tension de décharge de l'unité d'accumulation de tension (11) soit quasiment constante pendant environ une demi-durée de période du signal de tension (U).

8. Appareil de terrain (1) selon la revendication 7,
**caractérisé en ce que**
la capacité de l'unité d'accumulation de tension (11) est supérieure à la capacité de l'unité piézoélectrique (5).
